# EUROPÄISCHE PATENTSCHRIFT

(11) **EP 2 044 796 B1**
(45) Veröffentlichungstag und Bekanntmachung des Hinweises auf die Patenterteilung: **26.05.2010**
(21) Anmeldenummer: 07801325.7
(22) Anmeldetag: 06.09.2007
(51) Int. Cl.: H04W 4/00

(54) **GRUPPIERUNG VON TEILNEHMER-ENDGERÄT-ZELLZUGANGSINFORMATIONEN IN EINEM INFORMATIONSBLOCK EINER SYSTEMINFORMATION**
GROUPING OF USER TERMINAL CELL ACCESS INFORMATION IN A SYSTEM INFORMATION FRAME
GROUPEMENT D'INFROMATIONS D'ACCÈS D'UN TERMINAL UTILISATEUR À UNE CELLULE DE RADIOTÉLÉPHONIE MOBILE DANS UNE TRAME D'INFORMATIONS SYSTÈME

(30) Priorität: 21.09.2006 DE 102006044529; 21.09.2006 US 826474 P
(43) Veröffentlichungstag der Anmeldung: 08.04.2009
(73) Patentinhaber: Infineon Technologies AG, 85579 Neubiberg (DE)
(72) Erfinder: CHOI, Hyung-Nam, 22117 Hamburg (DE); ECKERT, Michael, 38122 Braunschweig (DE); KEMMER, Bernd, 82223 Eichenau (DE); MATH, Wolfgang, 81541 München (DE)
(74) Vertreter: Kühn, Armin
(86) Internationale Anmeldenummer: PCT/DE2007/001590
(87) Internationale Veröffentlichungsnummer: WO 2008/034408

(56) Entgegenhaltungen:
- WO-A-00/72609
- "Universal Mobile Telecommunications System (UMTS); Radio Resource Control (RRC); Protocol specification (3GPP TS 25.331 version 7.1.0 Release 7); ETSI TS 125 331" ETSI STANDARDS, EUROPEAN TELECOMMUNICATIONS STANDARDS INSTITUTE, SOPHIA-ANTIPO, FR, Bd. 3-R2, Nr. V710, Juni 2006 (2006-06), XP014035586 ISSN: 0000-0001
- "3GPP TR 25.813 V0.8.3 3rd Generation Partnership Project; Technical Specification Group Radio Access Network; Evolved Universal Terrestrial Radio Access (E-UTRA) and Evolved Universal Terrestrial Radio Access Network (E-UTRAN); Radio interface protocol aspects (Releas 7)" INTERNET CITATION, [Online] April 2006 (2006-04), XP002400402 Gefunden im Internet: URL:http://www.3gpp.org/ftp/Specs/html-inf o/25813.htm> [gefunden am 2006-09-26]

## Beschreibung

Die Erfindung betrifft ein Verfahren zum Erzeugen und Senden von Systeminformationen in einer Mobilfunkzelle, eine Netzwerkeinrichtung zum Erzeugen und Senden von Systeminformationen in einer Mobilfunkzelle, ein Verfahren zum Überprüfen, ob einem Mobilfunk-Teilnehmergerät der Zugang in einer Mobilfunkzelle ermöglicht ist und ein Mobilfunk-Teilnehmergerät.

Die Patentanmeldungsschrift WO 00/72609 Al offenbart ein Verfahren und eine Vorrichtung zum Senden von Systeminformationen in einem mobilen Kommunikationsnetzwerk.

Ferner beschreibt die Spezifikation "Universal Mobile Telecommunications System (UMTS); Radio Resource Control (RRC); Protocol Specification (3GPP TS 25.331 version 7.1.0 Release 7); ETSI TS 125 331" ETSI STANDARDS, EUROPEAN TELECOMMUNICATIONS STANDARDS INSTITUTE, SOPHIA-ANTIPO, FR, Bd. 3-R2, Nr. V710, Juni 2006 (2006-06) das Funk-Schnittstellenprotokoll für E-UTRA (evolved UMTS Terrestrial Radio Access) und UTRAN (UMTS Terrestrial Radio Access Network).

Eine Basisstation eines zellularen Mobilfunk-Kommunikationsnetzwerks überträgt in einer Mobilfunkzelle Systeminformationen, die es den Mobilfunk-Teilnehmergeräten, die sich in der Mobilfunkzelle befinden, ermöglichen, das Mobilfunk-Kommunikationsnetzwerk zu nutzen. Effiziente Verfahren zum Übermitteln dieser Systeminformationen sind wünschenswert.

Die Erfindung betrifft ein Verfahren zum Erzeugen und Senden von Systeminformationen in einer Mobilfunkzelle gemäß Anspruch 1, eine Netzwerkeinrichtung zum Erzeugen und Senden von Systeminformationen in einer Mobilfunkzelle gemäß Anspruch 14, ein Verfahren zum Überprüfen, ob einem Mobilfunk-Teilnehmergerät der Zugang in einer Mobilfunkzelle ermöglicht ist gemäß Anspruch 15 und ein Mobilfunk-Teilnehmergerät gemäß Anspruch 16.

Es wird ein Verfahren zum Erzeugen und Senden von Systeminformationen in einer Mobilfunkzelle bereitgestellt, bei dem Systeminformationen zu mehreren Informationsblöcken gruppiert werden, wobei die Informationen, die für ein Mobilfunk-Teilnehmergerät erforderlich sind, um zu überprüfen, ob ihm ein Zugang in der Mobilfunkzelle ermöglicht ist, in einen einzigen der Informationsblöcke gruppiert werden, aus den Informationsblöcken mindestens eine Informations-Nachricht gebildet wird, die Informations-Nachricht von einer Einheit der Netzwerkschicht einer Einheit der Datensicherungsschicht zugeführt wird und die Einheit der Datensicherungsschicht die Informations-Nachricht mittels mindestens einer Einheit der physikalischen Schicht versendet.

Bei zellularen Mobilfunk-Kommunikationssystemen, wie beispielsweise - Mobilfunk-Kommunikationssystemen gemäß dem GSM (Global System for Mobile Communications)-Standard oder dem UMTS (Universal Mobile Telecommunications System)-Standard werden wichtige Systeminformationen einer Mobilfunkzelle, das heißt Systeminformationen, die zum Betrieb eines Mobilfunk-Teilnehmergeräts in der Mobilfunkzelle erforderlich sind, von einer Basisstation, die die Mobilfunkzelle betreibt, per Broadcast (Rundsenden) an alle Mobilfunk-Teilnehmergeräte, die sich in der Mobilfunkzelle befinden, übermittelt. Diese Systeminformationen sind beispielsweise Netzbetreiber spezifische Informationen wie die Identität des Mobilfunknetzwerks, zu dem die Mobilfunkzelle gehört, beispielsweise eine PLMN (Public Land Mobile Network)-Identität, und die Identität der Mobilfunkzelle (Zell-Identität, Cell Identity) oder andere Informationen, die geeignet sind für eine eindeutige Identifikation von Mobilfunknetzwerk und/oder Mobilfunkzellen.

Gemäß einem Ausführungsbeispiel wird eine Netzwerkeinrichtung zum Erzeugen und Senden von Systeminformationen in einer Mobilfunkzelle bereitgestellt, welche aufweist
- eine Gruppierungseinrichtung, die eingerichtet ist, Systeminformationen zu mehreren Informationsblöcken zu gruppieren, wobei die Informationen, die für ein Mobilfunk-Teilnehmergerät erforderlich sind, um zu überprüfen, ob ihm ein Zugang in der Mobilfunkzelle ermöglicht ist, in einen einzigen der Informationsblöcke gruppiert werden,
- eine Erzeugungseinrichtung, die eingerichtet ist, aus den Informationsblöcken mindestens eine Informations-Nachricht zu bilden,
- eine Einheit der Netzwerkschicht, die eingerichtet ist, die Informations-Nachricht einer Einheit der Datensicherungsschicht zuzuführen und
- die Einheit der Datensicherungsschicht, die eingerichtet ist, die Informations-Nachricht mittels mindestens einer Einheit der physikalischen Schicht zu versenden.

Gemäß einem weiteren Ausführungsbeispiel der Erfindung wird ein Verfahren zum Überprüfen, ob einem Mobilfunk-Teilnehmergerät der Zugang in einer Mobilfunkzelle ermöglicht ist, bereitgestellt, bei dem ermittelt wird, in welchem Informationsblock einer Mehrzahl von in der Mobilfunkzelle versendeten Informationsblöcken die Informationen, die für das Mobilfunk-Teilnehmergerät erforderlich sind, um zu überprüfen, ob ihm ein Zugang in der Mobilfunkzelle ermöglicht ist, versendet werden, der Informationsblock empfangen wird, bevor andere Informationsblöcke der Mehrzahl von Informationsblöcken empfangen werden und überprüft wird, ob dem Mobilfunk-Teilnehmergerät der Zugang in der Mobilfunkzelle ermöglicht ist bevor andere Informationsblöcke der Mehrzahl von Informationsblöcken empfangen werden.

Gemäß noch einem weiteren Ausführungsbeispiel wird ein Mobilfunk-Teilnehmergerät bereitgestellt, welches aufweist
- eine Ermittlungseinrichtung, die eingerichtet ist, zu ermitteln, in welchen einzigen Informationsblock einer Mehrzahl von in einer Mobilfunkzelle versendeten Informationsblöcken die Informationen, die für das Mobilfunk-Teilnehmergerät erforderlich sind, um zu überprüfen, ob ihm ein Zugang in der Mobilfunkzelle ermöglicht ist, gruppiert sind,
- eine Empfangseinrichtung, die eingerichtet ist, den Informationsblock zu empfangen, bevor andere Informationsblöcke der Mehrzahl von Informationsblöcken empfangen werden und
- eine Prüfeinrichtung, die eingerichtet ist, zu überprüfen, ob dem Mobilfunk-Teilnehmergerät der Zugang in der Mobilfunkzelle ermöglicht ist, bevor andere Informationsblöcke der Mehrzahl von Informationsblöcken empfangen werden.

Anschaulich werden alle der Systeminformationen, die ein Mobilfunk-Teilnehmergerät benötigt, um entscheiden zu können, ob es sich erfolgreich in eine Mobilfunkzelle einbuchen kann, das heißt alle Tauglichkeitsinformationen (Suitability-Informationen) der Systeminformationen zu einem Informationsblock gruppiert. Auf diese Weise ist es nur erforderlich, dass das Mobilfunk-Teilnehmergerät diesen Informationsblock einliest, um entscheiden zu können, ob es versuchen soll, sich in der Mobilfunkzelle einzubuchen.

Gegenüber der Vorgehensweise, die Tauglichkeitsinformationen in verschiedenen Informationsblöcken zu übermitteln, kann der Empfang der Tauglichkeitsinformationen und damit das Entscheiden, ob eine Mobilfunkzelle geeignet ist für eine Einbuchung, beschleunigt werden. Damit kann die Zeit, die ein Mobilfunk-Teilnehmergerät benötigt, um eine Mobilfunkzelle zu finden, in die es sich einbuchen kann, reduziert werden. Letztendlich kann sich das Mobilfunk-Teilnehmergerät nach kürzerer Zeit erfolgreich in einer Mobilfunkzelle einbuchen und eine Kommunikationsverbindung zu einer Basisstation aufbauen.

Gemäß einem anderen Ausführungsbeispiel der Erfindung wird ein Verfahren zum Ermitteln von gültigen Systeminformationen durch ein Mobilfunk-Teilnehmergerät bereitgestellt, bei dem eine in einer Mobilfunkzelle versendete Identifikation empfangen wird, die einen Satz von Informationen, die für das Mobilfunk-Teilnehmergerät erforderlich sind, um zu überprüfen, ob ihm ein Zugang in der Mobilfunkzelle ermöglicht ist, der derzeit in der Mobilfunkzelle gültig ist, identifiziert, und in dem Fall, dass der Satz von Informationen gespeichert ist, anhand des gespeicherten Satzes von Informationen überprüft wird, ob dem Mobilfunk-Teilnehmergerät ein Zugang in der Mobilfunkzelle ermöglicht ist.

Auf diese Weise ist es nicht erforderlich, dass das Mobilfunk-Teilnehmergerät Informationen empfängt, sondern kann die gespeicherten Informationen verwenden, was zu einem weiteren Zeitgewinn führt. Ein gespeicherter Satz von Informationen kann auch mit einer Gültigkeitsdauer gekennzeichnet sein, die angibt, bis wann er für die Identifikation gültig ist, anders ausgedrückt durch diese Identifikation identifiziert wird. In diesem Fall wird nur dann anhand des gespeicherten Satzes von Informationen überprüft, ob dem Mobilfunk-Teilnehmergerät ein Zugang in der Mobilfunkzelle ermöglicht ist, wenn der Satz von Informationen noch für die Identifikation gültig ist. Die Identifikation kann beispielsweise in einem Master-Informationsblock (Master Information Block, MIB) übermittelt werden. Anschaulich kann in einem Master-Informationsblock signalisiert werden, welcher (möglicherweise) gespeicherte Satz von Informationen aktuell in der Mobilfunkzelle gültig ist.

Die Mobilfunkzelle ist eine Mobilfunkzelle eines Mobilfunknetzwerks, das beispielsweise gemäß dem UMTS-Standard, dem GSM-Standard, dem CDMA2000-Standard (CDMA: Code Division Multiple Access) oder dem FOMA(Freedom of Mobile Access)-Standard ausgestaltet ist.

Die Informations-Nachricht ist beispielsweise eine PDU (Packet Data Unit), die von der RRC-Schicht der RLC-Schicht zugeführt wird. Die Informations-Nachricht ist in einer Ausführungsform eine "System Information Message".

Ausführungsbeispiele der Erfindung können sowohl in Software, Hardware und gemischter Form (das heißt teils Software, teils Hardware) realisiert werden.

Die weiteren Ausgestaltungen der Erfindung, die im Zusammenhang mit dem Verfahren zum Erzeugen und Senden von Systeminformationen in einer Mobilfunkzelle beschrieben sind, gelten sinngemäß auch für das Verfahren zum Überprüfen, ob einem Mobilfunk-Teilnehmergerät der Zugang in einer Mobilfunkzelle ermöglicht ist, das Mobilfunk-Teilnehmergerät und das Verfahren zum Ermitteln von gültigen Systeminformationen.

Die Informationsblöcke sind beispielsweise ein Master-Informationsblock (oder mehrere Master-Informationsblöcke) oder Systeminformationsblöcke.

Der Informationsblock, in den die Informationen, die für das Mobilfunk-Teilnehmergerät erforderlich sind, um zu überprüfen, ob ihm ein Zugang in der Mobilfunkzelle ermöglicht ist, gruppiert werden, ist beispielsweise ein Master-Informationsblock. Der Informatiönsblock, in den die Informationen, die für das Mobilfunk-Teilnehmergerät erforderlich sind, um zu überprüfen, ob ihm ein Zugang in der Mobilfunkzelle ermöglicht ist, gruppiert werden, kann auch ein Systeminformationsblock sein.

Die Einheit der Datensicherungsschicht ist beispielsweise eine Einheit der RLC (Resource Link Control)-Schicht und die Einheit der Netzwerkschicht ist beispielsweise eine Einheit der RRC (Radio Resource Control)-Schicht.

Der Informationsblock, in den die Informationen, die für das Mobilfunk-Teilnehmergerät erforderlich sind, um zu überprüfen, ob ihm ein Zugang in der Mobilfunkzelle ermöglicht ist, gruppiert sind, enthält in einer Ausführungsform sonst keine Systeminformationen. Da der Informationsblock somit auf die minimale Größe reduziert ist, kann er sehr schnell im Rahmen einer Überprüfung, ob die Mobilfunkzelle für eine Einbuchung geeignet ist, eingelesen werden.

Die Systeminformationen werden beispielsweise von einer Basisstation versendet, die die Mobilfunkzelle betreibt. Die Einheit der Datensicherungsschicht ist beispielsweise in der Basisstation angeordnet. Die Einheit der Netzwerkschicht kann auch in der Basisstation angeordnet sein.

Den Informationen, die für das Mobilfunk-Teilnehmergerät erforderlich sind, um zu überprüfen, ob ihm ein Zugang in der Mobilfunkzelle ermöglicht ist, ist in einer Ausführungsform eine Identifikation zugeordnet, die es dem Mobilfunk-Teilnehmergerät ermöglicht, zu überprüfen, ob es die Informationen bereits gespeichert hat und die signalisiert, dass die durch die Identifikation identifizierten Informationen derzeit in der Mobilfunkzelle gültig sind.

Die Identifikation wird beispielsweise in den Informationsblock, in den die Informationen, die für das Mobilfunk-Teilnehmergerät erforderlich sind, um zu überprüfen, ob ihm ein Zugang in der Mobilfunkzelle ermöglicht ist, gruppiert werden, eingefügt.

Die Informationen können außerdem mit einer Gültigkeitsdauerinformation versehen sein, die spezifiziert, wie lange die Identifikation für die Informationen gültig ist. Auf diese Weise wird verhindert, dass die möglichen Identifikationen, die zur Verfügung stehen (beispielsweise von 0 bis 63, also 6 Bit) vollständig an Sätze von Informationen vergeben sind und keine neuen Sätze von Informationen mehr mit einer Identifikation versehen werden können.
Figur 1 zeigt ein Kommunikationssystem gemäß einem Ausführungsbeispiel der Erfindung.
Figur 2 zeigt ein Datenflussdiagramm.
Figur 3 zeigt einen Systeminformationsblock gemäß einem Ausführungsbeispiel der Erfindung.
Figur 4 zeigt eine Datenstruktur gemäß einem Ausführungsbeispiel der Erfindung.
Figur 5 zeigt ein Ablaufdiagramm gemäß einem Ausführungsbeispiel der Erfindung.
Figur 6 zeigt ein Datenflussdiagramm gemäß einem Ausführungsbeispiel der Erfindung.

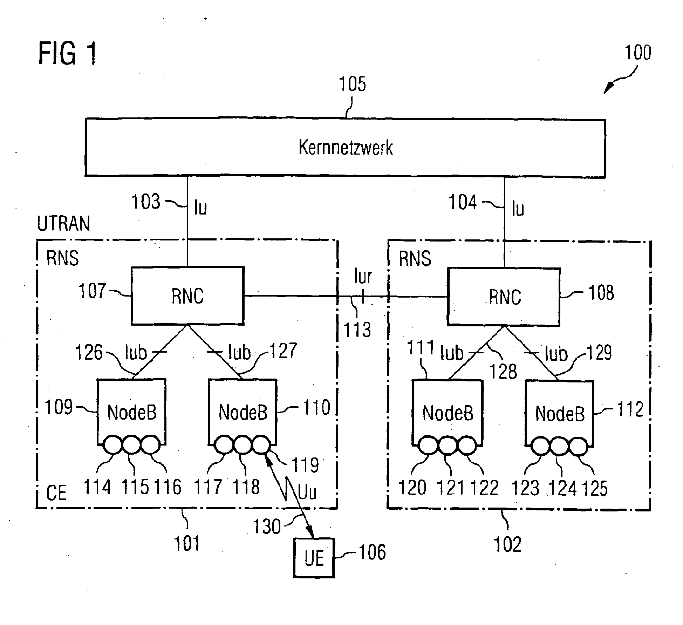

**Fig.1** zeigt ein Kommunikationssystem 100 gemäß einem Ausführungsbeispiel der Erfindung.

Das Kommunikationssystem 100 weist die Architektur eines UMTS-Funknetzes, das auch als UMTS-Terrestrial-Radio-Access-Network (UTRAN) bezeichnet wird, auf.

Das Kommunikationssystem 100 weist eine Mehrzahl von Funknetzwerksubsystemen (Radio Network Subsystems, RNS) 101, 102, auf, welche jeweils mittels einer Iu-Schnittstelle 103, 104 mit dem UMTS-Kernnetz (Core Network) 105 gekoppelt sind.

Die RNS 101, 102 weisen jeweils eine Funknetz-Steuereinheit (Radio Network Controller, RNC) 107, 108 sowie eine oder mehrere Basisstationen 109, 110, 111, 112 auf. Eine UTMS-Basisstation wird auch als NodeB bezeichnet.

Die RNCs 107, 108 unterschiedlicher RNS 101, 102 sind mittels einer Iur-Schnittstelle 113 miteinander gekoppelt.

Jede Basisstation 109, 110, 111, 112 eines RNS 101, 102 ist mittels einer Iub-Schnittstelle 126, 127, 128, 129 mit dem RNC 107, 108 des RNS 101, 102 gekoppelt. Jede Basisstation 109, 110, 111, 112 eines RNS 101, 102 betreibt funktechnisch eine oder mehrere Mobilfunkzellen (CE) 114 bis 125 innerhalb des RNS 101, 102. Der RNC 107, 108 eines RNS 101, 102 überwacht die Zuordnung von Funkressourcen der Mobilfunkzellen 114 bis 125 in dem RNS 101, 102.

Zwischen einer Basisstation 109, 110, 111, 112, und einem Mobilfunk-Teilnehmergerät (User Equipment, UE) 106 in einer Mobilfunkzelle 114 bis 125 werden Nachrichtensignale und Datensignale mittels einer Luftschnittstelle (Uu) 130 mittels einer Funkübertragungstechnologie übertragen. Beispielsweise wird in dem FDD (Frequency Division Duplex)-Modus eine getrennte Signalübertragung in Uplink-Richtung und Downlink-Richtung durch eine entsprechende separate Zuweisung von Frequenzen oder Frequenzbereichen erreicht. Unter Uplink ist die Signalübertragung von dem Mobilfunk-Teilnehmergerät 106 zu einer Basisstation 109, 110, 111, 112 und unter Downlink ist die Signalübertragung von einer Basisstation 109, 110, 111, 112 zu dem Mobilfunk-Teilnehmergerät 106 zu verstehen. Die Signale zu unterschiedlichen Mobilfunk-Teilnehmergeräten und von unterschiedlichen Mobilfunk-Teilnehmergeräten in derselben Mobilfunkzelle werden beispielsweise mittels orthogonaler Codes, beispielsweise mittels des so genannten CDMA (Code Division Multiple Access)-Verfahrens getrennt.

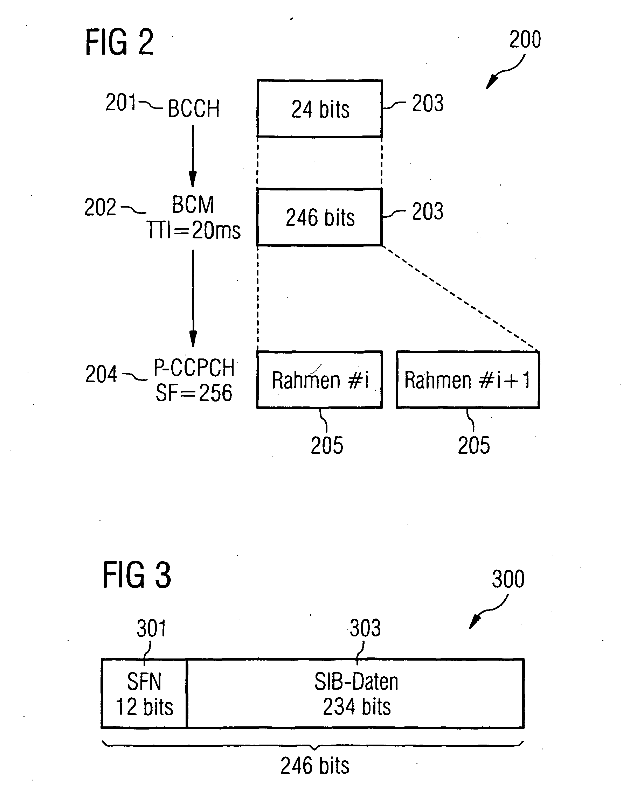

In den Mobilfunkzellen 114 bis 125 werden Systeminformationen, die den Betrieb von Mobilfunk-Teilnehmergeräten in der jeweiligen Mobilfunkzelle betreffen, mittels des logischen Kanals BCCH (Broadcast Control Channel) übermittelt. Der logische Kanal BCCH wird auf den Transportkanal BCH (Broadcast Channel) abgebildet und physikalisch mittels des physikalischen Kanals P-CCPCH (Primary Common Control Physical Channel) mittels der Luftschnittstelle übermittelt. Dies ist in Fig.2 illustriert.

**Fig.2** zeigt ein Datenflussdiagramm 200.

Mittels des BCCH 201 und des BCH 202 werden Systeminformationsbits zu Systeminformationsblöcken 203 von jeweils 246 Bits übermittelt. Die Systeminformationsblöcke 203 werden an die physikalische Schicht zum Versenden mittels des physikalischen Kanals P-CCPCH 204 übermittelt und werden zur Fehlererkennung gemäß CRC (Cyclic Redundancy Check) mit einem Wort, beispielsweise der Länge 26 Bits, ergänzt. Die Informationsbits und die zur Fehlererkennung angehängten Bits werden in der physikalischen Schicht gemeinsam kanalcodiert, moduliert und mit einem systemweit bekannten CDMA-Code mit dem Spreizfaktor SF = 256 gespreizt. Da für den BCH ein festes Übertragungszeitintervall (TTI, Transmission Time Interval) von 20 ms definiert ist (TTI = 20ms), werden die kanalcodierten Bits mittels zweier P-CCPCH-Senderahmen 205 in zwei Blöcken jeweils der Länge 20 ms mittels der Luftschnittstelle in der jeweiligen Mobilfunkzelle rundgesendet.

Das Format der Systeminformationsblöcke 203 wird im Folgenden mit Bezug auf Fig.3 erläutert.

**Fig.** 3 zeigt einen Systeminformationsblock (SIB) 300 gemäß einem Ausführungsbeispiel der Erfindung.

Der Systeminformationsblock 300 weist eine Systemrahmennummer (System Frame Number, SFN) 301 auf, die aus 12 Bits besteht. Im Anschluss an die Systemrahmennummer folgen SIB-Daten 303, die Systeminformationen enthalten und aus 234 Bits bestehen. Die Systemrahmennummer 301 spezifiziert das in der jeweiligen Mobilfunkzelle verwendete Timing und dient zur Synchronisation zwischen Basisstation und Mobilfunk-Teilnehmergerät.

In welchem Systeminformationsblock bestimmte Systeminformationen übermittelt werden, wird basierend auf der Art der Systeminformationen entschieden. Außer den Systeminformationsblöcken werden auch Master-Informationsblöcke (Master Information Block, MIB) und Scheduling-Blöcke (Scheduling Block, SB) übermittelt, in diesem Ausführungsbeispiel in derselben Art wie es mit Bezug auf Fig.2 für die Systeminformationsblöcke erläutert wurde. In einem Master-Informationsblock wird zum Beispiel die PLMN-Identität des Mobilfunknetzwerks übermittelt und Scheduling-Informationen bezüglich der Übertragung der Systeminformationsblöcke. In den Scheduling-Blöcken werden ebenfalls Scheduling-Informationen bezüglich der Systeminformationsblöcke signalisiert.

Bei einem UMTS-Mobilfunknetzwerk sind 18 Typen von Systeminformationsblöcken definiert. Die Zuordnung bestimmter Systeminformationen zu Systeminformationsblöcken, das heißt die Zuordnung, welcher Systeminformationsblock welche Systeminformationen enthält, ist beispielsweise wie folgt:
- SIB 1 enthält Informationen über das UMTS-Kernnetz sowie Informationen zu Konfiguration von systemrelevanten Zeitgebern (Timern) und Konstanten.
- SIB 3 enthält Parameterwerte, die für die Auswahl von Mobilfunkzellen und für den Wechsel der Mobilfunkzelle durch ein Mobilfunk-Teilnehmergerät erforderlich sind.
- SIB 5 enthält Informationen über die Konfiguration der gemeinsamen physikalischen Funkressourcen für Mobilfunk-Teilnehmergeräte, die sich im ruhenden Modus (Ideal Mode) befinden.
- SIB 6 enthält Informationen über die Konfiguration der gemeinsamen physikalischen Funkressourcen für Mobilfunk-Teilnehmergeräte, die sich im verbundenen Modus (Connected Mode) befinden.
- SIB 11 enthält Informationen für die Durchführung von Messungen.

In dem Systeminformationsblock mit der Nummer 16 werden Parameter der so genannten "Predefined Configurations" übermittelt, welche Radio Bearer-Parameter, Transportkanal-Parameter und Physikalischer-Kanal-Parameter aufweisen. Beim Aufbau einer Signalisierungsverbindung signalisiert ein Mobilfunk-Teilnehmergerät dem UMTS-Funkzugangsnetzwerk (UTRAN) eine Information mit der Bezeichnung "Predefined Configuration Value Tag". Auf diese Weise wird dem Mobilfunknetzwerk signalisiert, dass das Mobilfunk-Teilnehmergerät die im Systeminformations-Block mit der Nummer 16 enthaltenen "Predefined Configurations" (vordefinierten Konfigurationen) gespeichert hat. In der RRC-Connection-Setup-Nachricht signalisiert das UMTS-Funkzugangsnetzwerk dem Mobilfunk-Teilnehmergerät, welche vordefinierte Konfiguration verwendet werden soll in Form der so genannten "Predefined Configuration Identity". Ab UMTS in der Version Release 5 ist ein analoges Vorgehen auch für die Prozedur "Radio Bearer Reconfiguration" möglich.

Es können ferner Standard-Konfigurationen (Default Configurations) für RAB (Radio Access Bearer) und Signalisierungsverbindungen vorgesehen sein. Diese Standard-Konfigurationen sind in Mobilfunk-Teilnehmergeräten fest gespeichert. Statt einer kompletten Liste von Parametern zum Aufbau eines RABs oder einer Signalisierungsverbindung kann das UMTS-Funkzugangsnetzwerk einem Mobilfunk-Teilnehmergerät eine so genannte "Default Configuration Identity" übermitteln, die eine Standard-Konfiguration spezifiziert (dies ist ab UMTS in der Version Release 6 möglich). Bei UMTS in der Version R99 (Release 1999) werden Standard-Konfigurationen für die Prozedur "Handover to UTRAN" und bei UMTS in der Version Release 5 für die Prozeduren "RRC Connection Setup" und "Radio Bearer Reconfiguration" verwendet.

Damit ein Mobilfunk-Teilnehmergerät ein Mobilfunknetzwerk korrekt nutzen kann, stellt es sicher, dass es die aktuellen Systeminformationen in der Mobilfunkzelle, in der es sich befindet, empfangen hat. Ist die Menge der Systeminformationen, die eingelesen werden müssen, sehr groß, sind der Empfang und das Einlesen der Systeminformationen für die Mobilfunk-Teilnehmergeräte jedoch dementsprechend zeitintensiv. Dies ist insbesondere bei den Systeminformationen von Nachteil, die angeben, ob eine Mobilfunkzelle für ein Mobilfunk-Teilnehmergerät geeignet ist, welche im Folgenden als Tauglichkeitsinformationen (Suitability-Informationen) bezeichnet werden. Das Einlesen der Tauglichkeitsinformationen ist für ein Mobilfunk-Teilnehmergerät immer dann erforderlich, wenn es in eine andere Mobilfunkzelle wechseln möchte (Cell Re-Selection) und wenn das Mobilfunk-Teilnehmergerät eingeschaltet wird.

Gemäß einem Ausführungsbeispiel der Erfindung werden, damit das Einlesen der Tauglichkeitsinformationen effizient und schnell durchgeführt werden kann, alle Tauglichkeitsinformationen im Master-Informationsblock übermittelt. In einer Ausführungsform werden im Master-Informationsblock außer den Tauglichkeitsinformationen keine weiteren Informationen übermittelt. Alle Scheduling-Informationen werden in den Scheduling-Blöcken übermittelt. Auf diese Weise kann erreicht werden, dass die Größe des Master-Informationsblocks reduziert wird und dementsprechend die für das Einlesen des Master-Informationsblocks erforderliche Zeit reduziert wird.

Die Tauglichkeitsinformationen sind beispielsweise:
- die PLMN-Identität, das heißt eine Identifikation des Mobilfunknetzwerks, zu dem die Mobilfunkzelle gehört
- der LAC (Local Area Code), das heißt eine Kennzahl des Mobilfunknetzwerks
- Qqualmin, eine Angabe der minimalen erforderlichen Qualitätsstufe in der Mobilfunkzelle in Dezibel
- Qrxlevmin, eine Angabe des minimalen Empfängerpegels in der Mobilfunkzelle in dBm
- eine Angabe der maximal erlaubten Sendeleistung im Uplink
- eine Cell-Barred-Information, beispielsweise ein Cell-Barred-Bit, das anzeigt, ob die Mobilfunkzelle für Mobilfunk-Teilnehmergeräte (beispielsweise Mobilfunk-Teilnehmergeräte ohne bestimmte Privilegien) gesperrt ist
- ein Intra-Frequenz Zellreselektionsindikator (Intra-Frequency Cell Re-Selection Indicator), welcher angibt, ob das Mobilfunk-Teilnehmergerät sich unter Verwendung derselben Frequenz wie in der zuvor von dem Mobilfunk-Teilnehmergerät verwendeten Mobilfunkzelle in die Mobilfunkzelle einwählen darf
- der Wert des Parameters T_{barred}, welcher angibt, wie lange ein Mobilfunk-Teilnehmergerät die Mobilfunkzelle aus seiner Liste von benachbarten Mobilfunkzellen entfernen soll, wenn die Mobilfunkzelle als gesperrt (barred) gekennzeichnet ist
- die Angabe, ob die Mobilfunkzelle zur Nutzung durch den Betreiber des Mobilfunknetzwerks reserviert ist (Cell Reserved for Operator Use)
- eine Angabe, ob die Mobilfunkzelle reserviert ist für eine zukünftige Erweiterung des Mobilfunknetzwerks (Cell Reservation Extension)

Wie erwähnt werden die Tauglichkeitsinformationen beispielsweise in dem Master-Informationsblock übermittelt. Der Master-Informationsblock ist dementsprechend beispielsweise gemäß Tabelle 1 ausgestaltet. Andere Informationen, die bei herkömmlichen Mobilfunk-Kommunikationsnetzwerken im Master-Informationsblock übermittelt werden, werden in einem Ausführungsbeispiel mittels der Scheduling-Blocks oder mittels Systeminformationsblöcken übermittelt. Beispielsweise werden in einem Ausführungsbeispiel alle Scheduling-Informationen die Systeminformationsblöcke betreffen und die bei herkömmlichen Mobilfunknetzwerken im Master-Block übermittelt wurden, mittels der Scheduling-Blöcke übermittelt.

**Tabelle 1**

| Name des Informationselements/ der Gruppe | Bedarf | Multi | Typ | Beschreibung der Semantik |
|---|---|---|---|---|
| PLMN-Identität | MP | | PLMN- Identität | |
| LAC | MP | | Bit-String (16) | Das erste/linkeste Bit ist das am meisten signifikante Bit |
| Qqualmin | MP | | Integer (-24...0) | Ec/N0, [dB] |
| Qrxlevmin | MP | | Integer (-115...-25 in Zweierschritten | RSCP, [dBm] |
| Maximal zulässige | MP | | Maximale | [dBm] |
| Uplink-Sendeleistung | | | zulässige UL TX Leistung | UE_TXPWR_ MAX_RACH |
| Zelle gesperrt | MP | | Angabe aus Liste (gesperrt /nicht gesperrt) | |
| Intra-Frequenz-Zellreselektionsindikator | CV-Barred | | Angabe aus Liste (zulässig /nicht zulässig) | |
| T_{barred} | CV-Barred | | Integer (10,20, 40,80,160, 320,640,128 0) | [s] |
| Zelle reserviert für Nutzung durch den Betreiber | MP | | Angabe aus Liste (reserviert /nicht reserviert) | |
| reserviert für Erweiterung | MP | | Angabe aus Liste (reserviert /nicht reserviert) | |

Gemäß einem weiteren Ausführungsbeispiel der Erfindung werden die gesamten Tauglichkeitsinformationen innerhalb eines Systeminformationsblocks übermittelt, der beispielsweise in fester zeitlicher Assoziation zu dem Master-Informationsblock gesendet wird. Das heißt, dass festgelegt ist, nach wie viel Zeit der Systeminformationsblock nach Übersenden des Master-Informationsblocks von der Basisstation versendet wird.

Beispielsweise wird der Systeminformationsblock stets mittels eines Zeitrahmens der Länge 10ms versendet, der einem Zeitrahmen nachfolgt, in dem der Master-Informationsblock versendet wurde.

Bei einem anderen Ausführungsbeispiel der Erfindung werden Standardwerte für die Systeminformation verwendet. Das heißt, dass ein Mobilfunk-Teilnehmergerät Standard-Konfigurationen (Stored Configurations), das heißt mögliche Werte für die Systeminformationen, beispielsweise mögliche Ausgestaltungen von Systeminformationsblöcken, speichert, wobei die möglichen Systeminformationen mit einer Identifikation, beispielsweise mit einer Gespeicherte-Konfiguration-ID (Stored Configuration ID) zum Beispiel einer Zahl zwischen 1 und N, versehen werden.

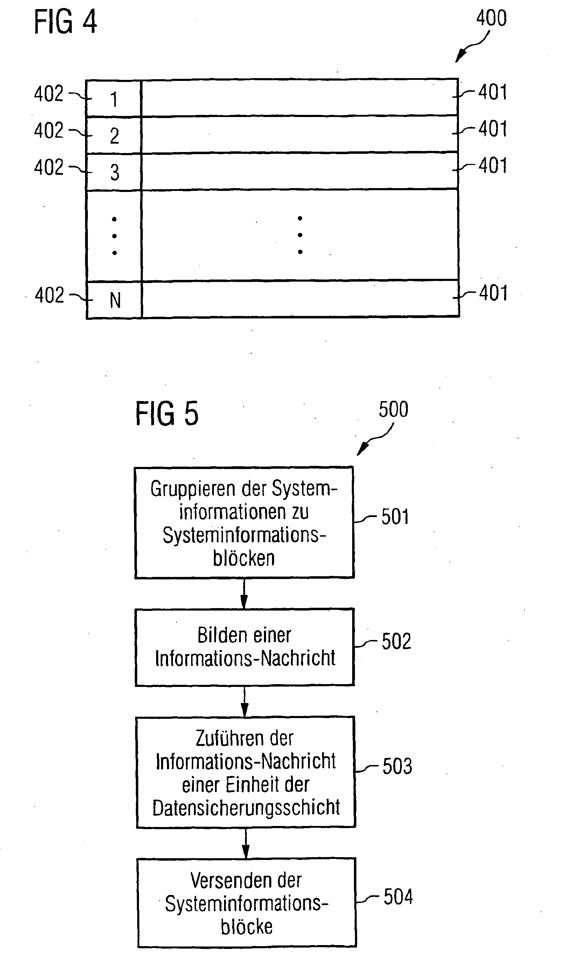

Gemäß einem Ausführungsbeispiel der Erfindung wird dies für die Tauglichkeitsinformationen angewandt, und wird im Folgenden mit Bezug auf Fig.4 genauer erläutert.

**Fig.4** zeigt eine Datenstruktur 400 gemäß einem Ausführungsbeispiel der Erfindung.

Die Datenstruktur 400 ist in einem Mobilfunk-Teilnehmergerät gespeichert und dient zum Speichern von Standard-Konfigurationen für die Tauglichkeitsinformationen. Das heißt, dass mögliche gültige Werte für die Tauglichkeitsinformationen in dem Mobilfunk-Teilnehmergerät in Form der Datenstruktur 400 gespeichert werden.

Die Datenstruktur 400 weist mehrere Sätze von Tauglichkeitsinformationen 401 auf. Jeder Satz von Tauglichkeitsinformationen 401 enthält Werte für die den Tauglichkeitsinformationen entsprechenden Parameter, das heißt beispielsweise für die oben genannten Parameter, aus deren Werte die Tauglichkeitsinformationen bestehen. Die Sätze von Tauglichkeitsinformationen geben Tauglichkeitsinformationen an, die in einer Mobilfunkzelle eventuell gültig sind. Jeder Satz von Tauglichkeitsinformationen 401 ist mit einer Tauglichkeitsinformationsidentifikation 402 versehen, so dass auf jeden Satz von Tauglichkeitsinformationen 401 Bezug genommen werden kann.

Statt dem Mobilfunk-Teilnehmergerät die kompletten Tauglichkeitsinformationen zu übermitteln, kann eine Basisstation, sofern die Tauglichkeitsinformationen, die von der Basisstation betriebenen Mobilfunkzelle gültig sind mit einem der Sätze von Tauglichkeitsinformationen 401 übereinstimmen, lediglich die Tauglichkeitsinformationsidentifikation an das Mobilfunk-Teilnehmergerät übermitteln, um dem Mobilfunk-Teilnehmergerät zu signalisieren, welche Tauglichkeitsinformationen in der Mobilfunkzelle gültig sind.

Die Datenstruktur 400 weist beispielsweise maximal N Sätze von Tauglichkeitsinformationen 401 auf. Dementsprechend weisen die Tauglichkeitsinformationsidentifikationen beispielsweise Werte von 1 bis N auf. Das Speichern von Standardwerten für die Tauglichkeitsinformationen beispielsweise in Form der Datenstruktur 400 ist effizient und wenig komplex, verglichen mit Informationen, die beispielsweise den Aufbau eines Radio Bearer für ein Radio Bearer Setup charakterisieren.

Während beim Speichern der Konfiguration eines Radio Bearer (RAB-Konfiguration) mit einer geeigneten Indizierung, so dass beim Aufbau eines Radio Bearers unter Verwendung eines Index schnell auf die Konfiguration eines Radio Bearers zugegriffen werden kann und somit der Aufbau eines Radio Bearers beschleunigt werden kann, eine erhebliche Komplexität aufgrund der hohen Datenmenge der zur Beschreibung eines Radio Bearers erforderlichen Parameter entsteht, ist dies beim Speichern von Standard-Konfigurationen für Tauglichkeitsinformationen nicht der Fall und es können Standardwerte für Tauglichkeitsinformationen effizient und mit geringer Komplexität verwaltet werden.

Neben der geringeren Datenmenge der Tauglichkeitsinformationen verglichen mit Parametern, die für die Beschreibung eines Radio Bearer erforderlich sind hat dies den Grund, da sich die Tauglichkeitsinformationen verglichen mit RAB-Konfigurationen seltener ändern.

Die Datenstruktur 400 wird beispielsweise dadurch aufgebaut, dass die Tauglichkeitsinformationen, die von den Basisstationen versendet werden, zusammen mit einer Tauglichkeitsinformationsidentifikation 402 versendet werden, und das Mobilfunk-Teilnehmergerät speichert die versendeten Tauglichkeitsinformationen in Form eines Satzes von Tauglichkeitsinformationen 401 zusammen mit der Tauglichkeitsinformationsidentifikation 402 in der Datenstruktur 400. Das Versenden der Tauglichkeitsinformationen kann dabei so erfolgen, dass die Tauglichkeitsinformationen alle zusammen in einem Master-Informationsblock übermittelt werden, dass die Tauglichkeitsinformationen alle zusammen in einem Systeminformationsblock übermittelt werden oder die Tauglichkeitsinformationen können auch über mehrere Systeminformationsblöcke verteilt übermittelt werden. Wenn eine Basisstation Tauglichkeitsinformationen zusammen mit einer Tauglichkeitsinformationsidentifikation versendet, so kann das Mobilfunk-Teilnehmergerät die Datenstruktur 400 überprüfen und anhand der Tauglichkeitsinformationsidentifikationen 402 feststellen, ob die versendeten Tauglichkeitsinformationen mit einem Satz von Tauglichkeitsinformationen 401 übereinstimmen. Ist dies der Fall, braucht das Mobilfunk-Teilnehmergerät die Tauglichkeitsinformationen nicht einlesen, sondern kann den gespeicherten Satz von Tauglichkeitsinformationen verwenden. Anderenfalls liest das Mobilfunk-Teilnehmergerät die versendeten Tauglichkeitsinformationen ein und speichert sie in der Datenstruktur zusammen mit der versendeten Tauglichkeitsinformationsidentifikation.

Bei einem Ausführungsbeispiel der Erfindung werden für jeden Systeminformationsblock Standardwerte gespeichert. Das heißt, dass analog zu Fig.4 für jeden Systeminformationsblock eine analoge Datenstruktur 400 in dem Mobilfunk-Teilnehmergerät vorgesehen ist, in dem Sätze von Systeminformationen, die in diesen Systeminformationsblock versendet werden, gespeichert sind.

Beispielsweise versendet eine Basisstation im Master-Informationsblock für jeden Systeminformationsblock die Systeminformationsidentifikation (analog zu den Tauglichkeitsinformationsidentifikation 402), die angibt, welcher Satz von Systeminformationen für diesen Systeminformationsblock gültig ist, anders ausgedrückt, welche Version des Systeminformationsblocks derzeit gültig ist. Ein solcher Master-Identifikationsblock ist in Tabelle 2 dargestellt.

**Tabelle 2**

| Name des Informationselements/ der Gruppe | Bedarf | Multi | Typ | Beschreibung der Semantik |
|---|---|---|---|---|
| Liste gespeicherter Konfigurationen | | 1 bis N | | |
| >SIB-Nummer | MP | | Integer (0...18) | |
| >Gespeicherte-Konfiguration-ID | MP | | Integer (0...64) | |
| PLMN-Identität | MP | | PLMN-Identität | |
| LAC | MP | | Bit-String (16) | Das erste /linkeste Bit ist das am meisten signifikante Bit |
| Qqualmin | MP | | Integer (-24...0) | Ec/N0, [dB] |
| Qrxlevmin | MP | | Integer (-115...-25 in Zweierschritten | RSCP, [dBm] |
| Maximal zulässige Uplink-Sendeleistung | MP | | Maximale zulässige UL TX Leistung | [dBm] UE_TXPWR_ MAX_RACH |
| Zelle gesperrt | MP | | Angabe aus Liste (gesperrt/nicht gesperrt) | |
| Intra-Frequenz-Zellreselektionsindikator | CV- Barred | | Angabe aus Liste (zulässig/ nicht zulässig) | |
| T_{barred} | CV- Barred | | Integer (10,20, 40,80,160, 320,640,1280) | [s] |
| Zelle reserviert für Nutzung durch den Betreiber | MP | | Angabe aus Liste (reserviert/ nicht reserviert) | |
| reserviert für Erweiterung | MP | Tabelle 2 | Angabe aus Liste (reserviert/ nicht reserviert) | |

Der Master-Identifikationsblock enthält in diesem Beispiel, ähnlich dem Master-Identifikationsblock, der gemäß Tabelle 1 ausgestaltet ist, entsprechend der Zeilen 5 bis 14 in Tabelle 2 die Tauglichkeitsinformationen. Entsprechend der Zeilen 2 bis 4 enthält der Master-Identifikationsblock für jeden Systeminformationsblock die Systeminformationsblockidentifikation, die angibt, welcher Satz von Systeminformationen für diesen Systeminformationsblock derzeit gültig ist. In diesem Beispiel weisen die Systeminformationsblockidentifikationen die Werte 0 bis 64 auf (Vergleiche Zeile 4, Spalte 4 von Tabelle 2) und die Systeminformationsblöcke sind von 0 bis 18 durchnummeriert (Vergleiche Zeile 3, Spalte 4 von Tabelle 2). Die ">"-Zeichen deuten an, dass die Informationen entsprechend Zeile 3 und Zeile 4 von Tabelle 4 also die Identifikation eines Systeminformationsblocks (SIB Nummer) zusammen mit der Systemblockidentifikation für jeden Systemblock gespeichert ist in Form der Liste von gespeicherten Informationen (Vergleiche Zeile 2 von Tabelle 2).

Es kann vorgesehen sein, dass für jeden Satz von Systeminformationen (beispielsweise Satz von Tauglichkeitsinformationen 401) eine Gültigkeitsdauer definiert ist, die eine Zeitspanne angibt, nach der der Satz von Systeminformationen von dem Mobilfunk-Teilnehmergerät, in dem er gespeichert ist, als nicht mehr gültig betrachtet wird. Auf diese Weise kann vermieden werden, dass nach einer bestimmten Betriebszeit des Mobilfunknetzwerks alle Systeminformationsidentifikationen vergeben sind, und keine neuen Systeminformationssätze mehr in dem Mobilfunk-Teilnehmergeräten gespeichert werden können bzw. nicht mehr mittels einer Systeminformationsidentifikation adressiert werden können.

Ist beispielsweise der Wertebereich der Systeminformationsidentifikationen wie im obigen Beispiel 0 bis 64, so könnten, sobald 65 Systeminformationssätze gespeichert und mittels der Systeminformationsidentifikation adressiert sind, keine neuen Systeminformationssätze von einer Basisstation mittels einer Systeminformationsidentifikation eindeutig adressiert werden, das heißt ein Satz von Systeminformationen, der mit keinen der bisher mittels der Systeminformationsidentifikation adressierten Sätze von Systeminformationen übereinstimmt, könnte nicht mehr identifiziert bzw. adressiert werden.

Durch die Verwendung einer Gültigkeitsdauer, nach der Sätze von Systeminformationen nicht mehr gültig sind, werden Systeminformationsidentifikationen anschaulich freigegeben und stehen zur Adressierung neuer Sätze von Systeminformationen zur Verfügung und können dementsprechend neu belegt werden.

Von der ISO (International Organisation for Standardisation) wurde ein aus sieben Schichten bestehendes Referenzmodell für die Beschreibung herstellerunabhängiger Kommunikationssysteme definiert, das als ISO/OSI-Modell bezeichnet wird. Das ISO/OSI-Modell wird verwendet, um eine Kommunikation zwischen verschiedenen Netzwerkgeräten unterschiedlicher Hersteller zu beschreiben. OSI steht dabei für offenes System für Kommunikationsverbindungen (Open System Interconnection). Die meisten frei nutzbaren Netzwerkprotokolle basieren auf diesem Referenzmodell, beispielsweise TCP/IP (Transport Control Protocol/Internet Protocol). Die sieben Ebenen des ISO/OSI-Modells sind so festgelegt, dass sie aufeinander aufbauen und dass Einheiten einer Ebene unabhängig von den Einheiten anderer Ebenen verwendet werden können. Die Einheiten der Ebenen 1 bis 4 bilden das Transportsystem, das heißt in den Ebenen 1 bis 4 werden die Kommunikationskanäle physikalisch und logisch festgelegt, und die Einheiten der Ebenen 5 bis 7 bilden das Anwendungssystem und dienen vorwiegend der Darstellung von Informationen. Die sieben Ebenen des ISO/OSI-Modells werden in ihrer Reihenfolge von 1 bis 7 bezeichnet als physikalische Schicht, Verbindungsschicht (oder auch Datensicherungsschicht oder Sicherungsschicht), Netzwerkschicht, Transportschicht, Sitzungsschicht, Darstellungsschicht und Anwendungsschicht.

In Tabelle 3 sind für jede Schicht die englische Bezeichnung, die deutsche Bezeichnung und Beispiele für Protokolle, die im Rahmen der jeweiligen Schicht verwendet werden, angegeben.

**Tabelle 3: ISO/OSI-Schichtmodell**

| Nr. | Englische Bezeichnung | Deutsche Bezeichnung | Beispiele |
|---|---|---|---|
| 7 | Application Layer | Anwendungsschicht | Web-Browser, Mail Programm |
| 6 | Presentation Layer | Darstellungsschicht | HTML, XML, MIME |
| 5 | Session Layer | Sitzungsschicht | http, FTP, POP3, SMTP |
| 4 | Transport Layer | Transportschicht | TCP |
| 3 | Network Layer | Netzwerkschicht | IP, RRC |
| 2 | Data Link Layer | Datensicherung sschicht | PPP, RLC, MAC |
| 1 | Physical Layer | Physikalische Schicht | IEEE 802, PHY |

Die Einheiten der Anwendungsschicht stellen die Schnittstelle zwischen dem jeweiligen Benutzer und Anwendungsprogrammen bereit, beispielsweise zu Nutzern von Email-Programmen oder Datenübertragungsdiensten.

Die Einheiten der Darstellungsschicht bereiten Daten zur Nutzung durch die Einheiten der Anwendungsschicht vor. Dabei werden Daten beispielsweise dekodiert, zwischen unterschiedlichen Formaten umgewandelt, verschlüsselt oder überprüft.

Die Einheiten der Sitzungsschicht stellen Dienste bereit, die zur Organisation der Datenübertragung dienen. Beispielsweise wird gewährleistet, dass Kommunikationsverbindungen trotz zwischenzeitlicher Unterbrechungen wieder aufgenommen werden können. Dazu werden beispielsweise Token in Datenpaketen verwendet.

Die Einheiten der Transportschicht geben die Möglichkeit, Kommunikationsverbindungen ordnungsgemäß aufzubauen und abzubauen, Kommunikationsverbindungen zu synchronisieren und Datenpakete zur Übertragung mittels mehrerer Kommunikationsverbindungen auf die Kommunikationsverbindungen zu verteilen (Multiplexing). Die Transportschicht bildet die Schnittstelle zwischen dem Transportsystem und dem Anwendungssystem gemäß dem ISO/OSI-Modell. Durch Einheiten der Transportschicht werden außerdem Datenpakete segmentiert und der Stau von Datenpaketen kann verhindert werden.

Die Einheiten der Netzwerkschicht übernehmen die Vermittlung und Zustellung von Datenpaketen. Beispielsweise führen sie die Zusammenstellung von Routingtabellen und das Routing durch. Sollen Datenpakete nur weitergeleitet werden, so erhalten sie durch Einheiten der Netzwerkschicht eine neue Zwischenzieladresse und werden nicht an Einheiten höherer Schichten weitergegeben. Auch die Kopplung unterschiedlicher Netzwerktopologien wird in der Netzwerkschicht durchgeführt.

Die Einheiten der Verbindungsschicht organisieren und überwachen den Zugriff auf das Datenübertragungsmedium. Zu übertragende Bitströme werden in der Verbindungsschicht segmentiert und zu Paketen zusammengefasst. Ferner können Daten eine Fehlerprüfung unterzogen werden, beispielsweise kann eine Prüfsumme an ein Datenpaket angehängt werden. Es kann auch eine Komprimierung von Daten vorgenommen werden. Weitere Aufgaben der Einheiten der Verbindungsschicht sind die Sequenzüberwachung, die Zeitüberwachung sowie die Flusskontrolle.

Die Verbindungsschicht lässt sich in zwei Teilschichten (auf Englisch auch bezeichnet als Sublayer) unterteilen. Die obere Teilschicht, das heißt die Teilschicht in Richtung der Netzwerkschicht, wird als LLC (Logical Link Control)-Schicht und die untere Teilschicht, das heißt die Teilschicht in Richtung der physikalischen Schicht, wird als MAC (Medium Access Control)-Schicht bezeichnet. Die Funktionalität der Einheiten der MAC-Schicht kann je nach dem verwendeten Übertragungsmedium (das heißt je nach Ausgestaltung der physikalischen Schicht) unterschiedlich ausgeprägt sein. Zu den Hauptaufgaben der MAC-Schicht gehören üblicherweise:
- Erkennen, wo Datenpakete (Englisch: frames) in dem von den Einheiten der physikalischen Schicht empfangenen Bitstrom anfangen und aufhören (beim Empfang von Daten).
- Einteilen des Datenstroms in Datenpakete und gegebenenfalls Einfügen von Zusatzbits in die Datenpaketstruktur, damit der Anfang und das Ende eines Datenpakets bei einem Empfänger detektiert werden kann (beim Senden von Daten).
- Feststellen von Übertragungsfehlern, beispielsweise durch das Einfügen einer Checksumme beim Senden bzw. durch entsprechende Kontroll-Berechnungen beim Empfang.
- Einfügen bzw. Auswerten von MAC-Adressen beim Senden bzw. beim Empfangen.
- Zugriffskontrolle, das heißt Entscheiden, wenn mehrere Einheiten auf das physikalische Übertragungsmedium zugreifen möchten, welcher der Einheiten das Zugriffsrecht erteilt wird.

Die physikalische Schicht betrifft Eigenschaften des Übertragungsmediums. Beispielsweise werden dabei zu verwendende Wellenlängen und Signalpegel definiert. Die Einheiten der physikalischen Schicht wandeln die zu übertragenden Bitfolgen in übertragbare Formate um.

Gemäß einem Ausführungsbeispiel der Erfindung wird ein Verfahren bereitgestellt, wie es in Fig.5 dargestellt ist.

**Fig.5** zeigt ein Ablaufdiagramm 500 gemäß einem Ausführungsbeispiel der Erfindung.

Das Ablaufdiagramm 500 illustriert ein Verfahren zum Erzeugen und Senden von Systeminformationen an ein Mobilfunk-Teilnehmergerät in einer Mobilfunkzelle.

In Schritt 501 werden Systeminformationen zu mehreren Systeminformationsblöcken gruppiert, wobei die Informationen, die für ein Mobilfunk-Teilnehmergerät erforderlich sind, um zu überprüfen, ob ihm ein Zugang in der Mobilfunkzelle ermöglicht ist, in einen einzigen der Systeminformationsblöcke gruppiert werden.

In Schritt 502 wird aus den Informationsblöcken mindestens eine Informations-Nachricht gebildet.

In Schritt 503 wird die Informations-Nachricht von einer Einheit der Netzwerkschicht einer Einheit der Datensicherungsschicht zugeführt.

In Schritt 504 wird die Informations-Nachricht von der Einheit der Datensicherungsschicht mittels mindestens einer Einheit der physikalischen Schicht versendet.

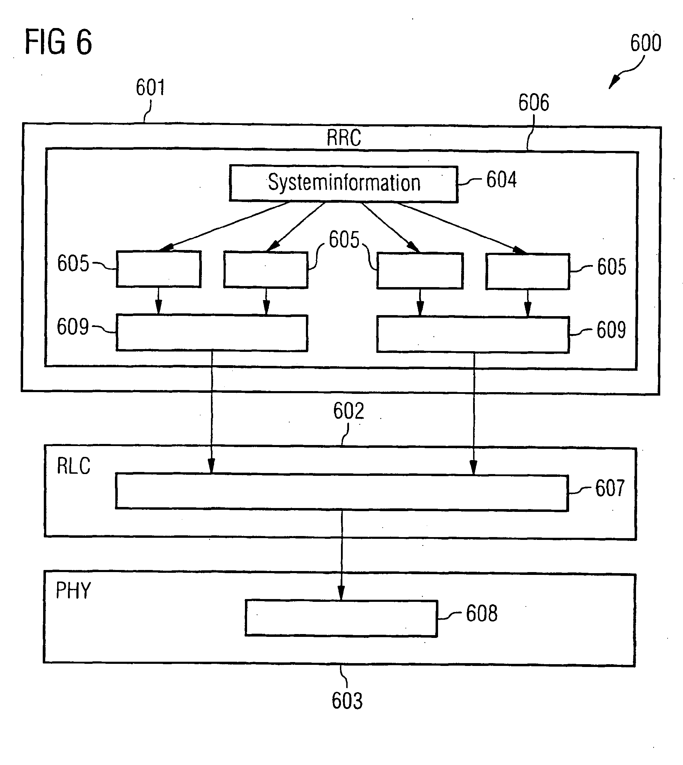

In Fig.6 ist illustriert, welche Aufgaben in welchen Schichten gemäß einem Ausführungsbeispiel der Erfindung durchgeführt werden.

**Fig.6** zeigt ein Datenflussdiagramm 600 gemäß einem Ausführungsbeispiel der Erfindung.

Der dargestellte Datenfluss findet zwischen Einheiten der Netzwerkschicht 601, der Datensicherungsschicht (Verbindungsschicht) 602 und der physikalischen Schicht 603 statt.

Von einer Einheit der Netzwerkschicht 606, in diesem Ausführungsbeispiel von einer Einheit der RRC (Radio Resource Control)-Schicht, das heißt einer Einheit, die Aufgaben im Rahmen des RRC-Protokolls durchführt, werden Systeminformationen 604 zu mehreren Informationsblöcken 605 gruppiert.

Die Systeminformationen 604 werden zumindest teilweise von einer Einheit der RRC-Schicht erzeugt.

Einer der Informationsblöcke 605 enthält sämtliche Informationen, die für ein Mobilfunk-Teilnehmergerät erforderlich sind, um zu überprüfen, ob ihm ein Zugang in der Mobilfunkzelle in der die Systeminformationen 604 versendet werden, ermöglicht ist, das heißt alle Tauglichkeitsinformationen (Suitability-Informationen).

Aus den Informationsblöcken werden in der RRC-Schicht 601 Informations-Nachrichten 609 gebildet, die einer Einheit der Datensicherungsschicht 607, in diesem Beispiel einer Einheit der RLC(Radio Link Control)-Schicht, das heißt einer Einheit, die Aufgaben im Rahmen des RLC-Protokolls durchführt, zugeführt werden.

Die Einheit der Datensicherungsschicht 607 führt die Informations-Nachrichten 609, die von der Einheit der Datensicherungsschicht 607 beispielsweise für eine mögliche Fehlerkorrektur mit Fehlerkorrekturbits ergänzt wurden oder zum Versenden segmentiert wurden, einer Einheit der physikalischen Schicht 608 zu. Die Einheit der physikalischen Schicht 608 versendet die Informations-Nachrichten 609. Beispielsweise werden die Informations-Nachrichten 609 in der Mobilfunkzelle rundgesendet.

Die Informationsblöcke 605 können sowohl Systeminformationsblöcke (SIBs, System Information Blocks) als auch ein Master-Informationsblock (MIB, Master Information Block) sein.

Beim Versenden der Informations-Nachrichten 609 mittels der Einheit der physikalischen Schicht 608, beispielsweise einem physikalischen Kanal, beispielsweise einem Broadcast-Kanal, kann auch eine Einheit der MAC-Schicht (nicht dargestellt) beteiligt sein, die beispielsweise den Zugriff auf den physikalischen Kanal regelt.

### Bezugszeichenliste

- 100: Kommunikationssystem
- 101,102: RNS
- 103,104: Iu-Schnittstelle
- 105: Kernnetz
- 106: Teilnehmergerät
- 107,108: RNC
- 109-112: Basisstationen
- 113: Iur-Schnittstelle
- 114-125: Funkzellen
- 126-129: Iub-Schnittstelle
- 130: Luftschnittstelle

- 200: Datenflussdiagramm
- 201: BCCH
- 202: BCH
- 203: Systeminformationsblöcke
- 204: P-CCPCH
- 205: P-CCPCH-Senderahmen

- 300: Systeminformationsblock
- 301: Systemrahmennummer
- 302: SIB-Daten

- 400: Datenstruktur
- 401: Sätze von Tauglichkeitsinformationen
- 402: Tauglichkeitsinformationsidentifikation

- 500: Ablaufdiagramm
- 501-504: Ablaufschritte

- 600: Datenflussdiagramm
- 601: Netzwerkschicht
- 602: Datensicherungsschicht
- 603: physikalische Schicht
- 604: Systeminformationen
- 605: Informationsblöcke
- 606: Einheit der Netzwerkschicht
- 607: Einheit der Datensicherungsschicht
- 608: Einheit der physikalischen Schicht
- 609: Informations-Nachrichten

## Patentansprüche

1. Verfahren zum Erzeugen und Senden von Systeminformationen (604) in einer Mobilfunkzelle (114-125), bei dem
- Systeminformationen (604) zu mehreren Informationsblöcken (605) gruppiert werden, wobei die Informationen, die für ein Mobilfunk-Teilnehmergerät (106) erforderlich sind, um zu überprüfen, ob ihm ein Zugang in der Mobilfunkzelle (114-125) ermöglicht ist, in einen einzigen der Informationsblöcke (605) gruppiert werden,
- aus den Informationsblöcken (605) mindestens eine Informations-Nachricht (609) gebildet wird,
- die Informations-Nachricht (609) von einer Einheit der Netzwerkschicht (606) einer Einheit der Datensicherungsschicht (607) zugeführt wird und
- die Einheit der Datensicherungsschicht (607) die Informations-Nachricht (609) mittels mindestens einer Einheit der physikalischen Schicht (608) versendet.

2. Verfahren gemäß Anspruch 1, wobei die Informationsblöcke (605) ein Master-Informationsblock oder Systeminformationsblöcke (203, 300) sind.

3. Verfahren gemäß Anspruch 2, wobei der Informationsblock (605), in den die Informationen, die für das Mobilfunk-Teilnehmergerät (106) erforderlich sind, um zu überprüfen, ob ihm ein Zugang in der Mobilfunkzelle (114-125) ermöglicht ist, gruppiert werden, ein Master-Informationsblock ist.

4. Verfahren gemäß Anspruch 2, wobei der Informationsblock (605), in den die Informationen, die für das Mobilfunk-Teilnehmergerät (106) erforderlich sind, um zu überprüfen, ob ihm ein Zugang in der Mobilfunkzelle (114-125) ermöglicht ist, gruppiert werden, ein Systeminformationsblock (203, 300) ist.

5. Verfahren gemäß Anspruch 1, wobei die Einheit der Datensicherungsschicht (607) eine Einheit der RLC-Schicht ist.

6. Verfahren gemäß Anspruch 1, wobei die Einheit der Netzwerkschicht (606) eine Einheit der RRC-Schicht ist.

7. Verfahren gemäß Anspruch 1, wobei der Informationsblock (605), in den die Informationen, die für das Mobilfunk-Teilnehmergerät (106) erforderlich sind, um zu überprüfen, ob ihm ein Zugang in der Mobilfunkzelle (114-125) ermöglicht ist, gruppiert sind, sonst keine Systeminformationen (604) enthält.

8. Verfahren gemäß Anspruch 1, wobei die Systeminformationen (604) von einer Basisstation (109-112) versendet werden, die die Mobilfunkzelle (114-125) betreibt.

9. Verfahren gemäß Anspruch 1, wobei die Einheit der Datensicherungsschicht (607) in der Basisstation (109-112) angeordnet ist.

10. Verfahren gemäß Anspruch 1, wobei die Einheit der Netzwerkschicht (606) in der Basisstation (109-112) angeordnet ist.

11. Verfahren gemäß Anspruch 1, wobei den Informationen, die für das Mobilfunk-Teilnehmergerät (106) erforderlich sind, um zu überprüfen, ob ihm ein Zugang in der Mobilfunkzelle (114-125) ermöglicht ist, eine Identifikation zugeordnet ist, die es dem Mobilfunk-Teilnehmergerät (106) ermöglicht, zu überprüfen, ob es die Informationen bereits gespeichert hat und die signalisiert, dass die durch die Identifikation identifizierten Informationen derzeit in der Mobilfunkzelle (114-125) gültig sind.

12. Verfahren gemäß Anspruch 11, wobei die Identifikation in dem Informationsblock (605), in den die Informationen, die für das Mobilfunk-Teilnehmergerät (106) erforderlich sind, um zu überprüfen, ob ihm ein Zugang in der Mobilfunkzelle (114-125) ermöglicht ist, gruppiert werden, eingefügt wird.

13. Verfahren gemäß Anspruch 11, wobei die Informationen, mit einer Gültigkeitsdauerinformation versehen sind, die spezifiziert, wie lange die Identifikation für die Informationen gültig ist.

14. Netzwerkeinrichtung zum Erzeugen und Senden von Systeminformationen (604) in einer Mobilfunkzelle (114-125), aufweisend
- eine Gruppierungseinrichtung, die eingerichtet ist, Systeminformationen (604) zu mehreren Informationsblöcken (605) zu gruppieren, wobei die Informationen, die für ein Mobilfunk-Teilnehmergerät (106) erforderlich sind, um zu überprüfen, ob ihm ein Zugang in der Mobilfunkzelle (114-125) ermöglicht ist, in einen einzigen der Informationsblöcke (605) gruppiert werden,
- eine Erzeugungseinrichtung, die eingerichtet ist, aus den Informationsblöcken (605) mindestens eine Informations-Nachricht (609) zu bilden,
- eine Einheit der Netzwerkschicht (606), die eingerichtet ist, die Informations-Nachricht (609) einer Einheit der Datensicherungsschicht (607) zuzuführen und
- die Einheit der Datensicherungsschicht (607), die eingerichtet ist, die Informations-Nachricht (609) mittels mindestens einer Einheit der physikalischen Schicht (608) zu versenden.

15. Verfahren zum Überprüfen, ob einem Mobilfunk-Teilnehmergerät (106) der Zugang in einer Mobilfunkzelle (114-125) ermöglicht ist, bei dem
- ermittelt wird, in welchen einzigen Informationsblock (605) einer Mehrzahl von in der Mobilfunkzelle (114-125) versendeten Informationsblöcken (605) die Informationen, die für das Mobilfunk-Teilnehmergerät (106) erforderlich sind, um zu überprüfen, ob ihm ein Zugang in der Mobilfunkzelle (114-125) ermöglicht ist, gruppiert sind,
- der Informationsblock (605) empfangen wird, bevor andere Informationsblöcke (605) der Mehrzahl von Informationsblöcken (605) empfangen werden und
- überprüft wird, ob dem Mobilfunk-Teilnehmergerät (106) der Zugang in der Mobilfunkzelle (114-125) ermöglicht ist bevor andere Informationsblöcke (605) der Mehrzahl von Informationsblöcken (605) empfangen werden.

16. Mobilfunk-Teilnehmergerät (106), aufweisend
- eine Ermittlungseinrichtung, die eingerichtet ist, zu ermitteln, in welchen einzigen Informationsblock (605) einer Mehrzahl von in einer Mobilfunkzelle (114-125) versendeten Informationsblöcken (605) die Informationen, die für das Mobilfunk-Teilnehmergerät (106) erforderlich sind, um zu überprüfen, ob ihm ein Zugang in der Mobilfunkzelle (114-125) ermöglicht ist, gruppiert sind,
- eine Empfangseinrichtung, die eingerichtet ist, den Informationsblock (605) zu empfangen, bevor andere Informationsblöcke (605) der Mehrzahl von Informationsblöcken (605) empfangen werden
- eine Prüfeinrichtung, die eingerichtet ist, zu überprüfen, ob dem Mobilfunk-Teilnehmergerät (106) der Zugang in der Mobilfunkzelle (114-125) ermöglicht ist, bevor andere Informationsblöcke (605) der Mehrzahl von Informationsblöcken (605) empfangen werden.

## Claims

1. Method for generating and transmitting system information (604) in a mobile radio cell (114-125), in which
• system information (604) is grouped to a plurality of information blocks (605), wherein the information that is required for a mobile radio subscriber device (106) to verify if it is provided with access to the mobile radio cell (114-125) is grouped into a single one of the information blocks (605),
• at least one information message (609) is formed from the information blocks (605),
• the information message (609) is supplied by a unit of the network layer (606) to a unit of the data link layer (607) and
• the unit of the data link layer (607) transmits the information message (609) by means of at least a unit of the physical layer (608).

2. Method according to claim 1,
wherein the information blocks (605) are a master information block or system information blocks (203, 300).

3. Method according to claim 2,
wherein the information block (605), into which the information that is required for the mobile radio subscriber device (106) in order to verify if it is provided with access to the mobile radio cell (114-125) is grouped, is a master information block.

4. Method according to claim 2,
wherein the information block (605), into which the information that is required for the mobile radio subscriber device (106) in order to verify if it is provided with access to the mobile radio cell (114-125) is grouped, is a system information block (203,300).

5. Method according to claim 1,
wherein the unit of the data link layer (607) is a unit of the RLC layer.

6. Method according to claim 1,
wherein the unit of the network layer (606) is a unit of the RRC layer.

7. Method according to claim 1,
wherein the information block (605), into which the information that is required for the mobile radio subscriber device (106) in order to verify if it is provided with access to the mobile radio cell (114-125) is grouped, does not contain any other system information (604).

8. Method according to claim 1,
wherein the system information (604) is transmitted by a base station (109-112) which operates the mobile radio cell (114-125).

9. Method according to claim 1,
wherein the unit of the data link layer (607) is arranged in the base station (109-112).

10. Method according to claim 1,
wherein the unit of the network layer (606) is arranged in the base station (109-112).

11. Method according to claim 1,
wherein the information that is required for the mobile radio subscriber device (106) in order to verify if it is provided with access to the mobile radio cell (114-125) is assigned a identification, which enables the mobile radio subscriber device (106) to verify if it has already stored the information and which signals that the information identified by the identification is currently valid in the mobile radio cell (114-125).

12. Method according to claim 11,
wherein the identification is inserted into the information block (605) into which the information that is required for the mobile radio subscriber device (106) in order to verify if it is provided with access to the mobile radio cell (114-125) is grouped.

13. Method according to claim 11,
wherein the information is provided with validity period information which specifies how long the identification for the information is valid.

14. Network device for generating and transmitting system information (604) in a mobile radio cell (114-125), comprising
• a grouping device which is configured to group system information (604) to a plurality of information blocks (605), wherein the information that is required for a mobile radio subscriber device (106) to verify if it is provided with access to the mobile radio cell (114-125) is grouped into a single one of the information blocks (605),
• a generating device which is configured to form at least one information message (609) from the information blocks (605),
• a unit of the network layer (606) which is configured to supply the information message (609) to a unit of the data link layer (607) and
• the unit of the data link layer (607) which is configured to transmit the information message (609) by means of at least a unit of the physical layer (608).

15. Method for verifying if a mobile radio subscriber device (106) is provided with access to a mobile radio cell (114-125), wherein
• it is determined into which single information block (605) of a plurality of information blocks (605) transmitted in the mobile radio cell (114-125) the information that is required for the mobile radio subscriber device (106) in order to verify if it is provided with access in the mobile radio cell (114-125) is grouped,
• the information block (605) is received before other information blocks (605) of the plurality of information blocks (605)are received and
• it is verified if access in the mobile radio cell (114-125) is provided for the mobile radio subscriber device (106) before other information blocks (605) of the plurality of information blocks (605) are received.

16. Mobile radio subscriber device (106), comprising
• a determining device which is configured to determine into which single information block (605) of a plurality of information blocks (605) transmitted in the mobile radio cell (114-125) the information that is required for the mobile radio subscriber device (106) in order to verify if it is provided with access in the mobile radio cell (114-125) is grouped,
• a receiving device which is configured to receive the information block (605) before other information blocks (605) of the plurality of information blocks (605)are received,
• a testing device which is configured to verify if access to the mobile radio cell (114-125) is provided for the mobile radio user device (106) before other information blocks (605) of the plurality of information blocks (605) are received.

## Revendications

1. Procédé de production et d'émission d'informations (604) de système dans une cellule (114 à 125) de radiotéléphonie mobile, dans lequel
- on regroupe des informations (604) de système en plusieurs blocs (605) d'informations, les informations, qui sont nécessaires pour un appareil (106) abonné de radiotéléphonie mobile pour contrôler si un accès à la cellule (114 à 125) de radiotéléphonie mobile est possible, étant regroupées dans l'un unique des blocs (605) d'informations,
- on forme au moins un message (609) d'informations à partir des blocs (605) d'informations,
- on envoie le message (609) d'informations d'une unité de la couche (606) de réseau à une unité de la couche (607) de sécurité des données,
- l'unité de la couche (607) de sécurité des données envoie le message (609) d'informations au moyen d'au moins une unité de la couche (608) physique.

2. Procédé suivant la revendication 1, dans lequel les blocs (605) d'informations sont un bloc d'informations maître ou un bloc (203, 300) d'informations de système.

3. Procédé suivant la revendication 2, dans lequel le bloc (605) d'informations, dans lequel les informations, qui sont nécessaires pour l'appareil (106) abonné de radiotéléphonie mobile pour contrôler s'il lui est possible d'accéder à la cellule (114 à 125) de radiotéléphonie mobile, sont regroupées, est un bloc d'informations maître.

4. Procédé suivant la revendication 2, dans lequel le bloc (605) d'informations, dans lequel les informations, qui sont nécessaires à l'appareil (106) abonné de radiotéléphonie mobile pour contrôler s'il peut avoir accès à la cellule (114 à 125) de radiotéléphonie mobile, sont regroupées, est un bloc (203, 300) d'informations de système.

5. Procédé suivant la revendication 1, dans lequel l'unité de la couche (607) de sécurité de données est une unité de la couche RLC.

6. Procédé suivant la revendication 1, dans lequel l'unité de la couche (606) de réseau est une unité de la couche RRC.

7. Procédé suivant la revendication 1, dans lequel le bloc (605) d'informations, dans lequel les informations, qui sont nécessaires à l'appareil (106) abonné de radiotéléphonie mobile pour contrôler s'il peut avoir accès à la cellule (114 à 125) de radiotéléphonie mobile, sont regroupées, ne contient pas sinon d'informations (604) de système.

8. Procédé suivant la revendication 1, dans lequel les informations (604) de système sont envoyées d'une station (109 à 112) de base, qui fait fonctionner la cellule (114 à 125) de radiotéléphonie mobile.

9. Procédé suivant la revendication 1, dans lequel l'unité de la couche (607) de sécurité de données est disposée dans la station (109 à 112) de base.

10. Procédé suivant la revendication 1, dans lequel l'unité de la couche (606) de réseau est disposée dans la station (109 à 112) de base.

11. Procédé suivant la revendication 1, dans lequel, aux informations qui sont nécessaires pour l'appareil (106) abonné de radiotéléphonie mobile pour contrôler s'il peut avoir accès à la cellule (114 à 125) de radiotéléphonie mobile, est affectée une identification, qui permet à l'appareil (106) abonné de radiotéléphonie mobile de contrôler s'il a déjà mémorisé les informations et qui signale que les informations identifiées par l'identification sont valables actuellement dans la cellule (114 à 125) de radiotéléphonie mobile.

12. Procédé suivant la revendication 11, dans lequel on ajoute l'identification dans le bloc (605) d'informations, dans lequel sont regroupées les informations qui sont nécessaires à l'appareil (106) abonné de radiotéléphonie mobile pour contrôler s'il peut avoir accès à la cellule (114 à 125) de radiotéléphonie mobile.

13. Procédé suivant la revendication 11, dans lequel les informations sont munies d'une information de durée de validité qui spécifie combien de temps l'identification est valable pour les informations.

14. Dispositif de réseau pour produire et envoyer des informations (604) de système à une cellule (114 à 125) de radiotéléphonie mobile, comprenant
- un dispositif de regroupement, qui est conçu pour regrouper des informations (604) de système en plusieurs blocs (605) d'informations, les informations, qui sont nécessaires pour un appareil (106) abonné de radiotéléphonie mobile étant contrôlées sur le point de savoir s'il peut avoir accès à la cellule (114 à 125) de radiotéléphonie mobile, étant regroupées en l'un unique des blocs (605) d'informations,
- un dispositif de production, qui est conçu pour former au moins un message (609) d'informations à partir des blocs (605) d'informations,
- une unité de la couche (606) de réseau, qui est conçue pour envoyer le message (609) d'informations à une unité de la couche (607) de sécurité de données, et
- l'unité de la couche (607) de sécurité de données, qui est conçue pour émettre le message (609) d'informations au moyen d'au moins une unité de la couche (608) physique.

15. Procédé de contrôle du point de savoir si un appareil (106) abonné de radiotéléphonie mobile peut avoir accès à une cellule (114 à 125) de radiotéléphonie mobile, dans lequel
- on détermine dans quel bloc (605) d'informations unique d'une multiplicité de blocs (605) d'informations envoyés à la cellule (114 à 125) de radiotéléphonie mobile sont regroupées les informations qui sont nécessaires à l'appareil (106) abonné de radiotéléphonie mobile, pour qu'il puisse avoir accès à la cellule (114 à 125) de radiotéléphonie mobile,
- on reçoit le bloc (605) d'informations avant de recevoir d'autres blocs (605) d'informations de la multiplicité de blocs (605) d'informations et
- on contrôle si l'appareil (106) abonné de radiotéléphonie mobile peut avoir accès à la cellule (114 à 125) de radiotéléphonie mobile avant que d'autres blocs (605) d'informations de la multiplicité de blocs (605) d'informations soient reçus.

16. Appareil (106) abonné de radiotéléphonie mobile, comprenant
- un dispositif de détermination, qui est conçu pour déterminer dans quel bloc (605) d'informations unique d'une multiplicité de blocs (605) d'informations envoyés à une cellule (114 à 125) de radiotéléphonie mobile sont regroupées les informations qui sont nécessaires à l'appareil (106) d'abonné de radiotéléphonie mobile pour contrôler s'il peut avoir accès à la cellule (114 à 125) de radiotéléphonie mobile,
- un dispositif de réception, qui est conçu pour recevoir le bloc (605) d'informations avant que d'autres blocs (605) d'informations de la multiplicité de blocs (605) d'informations soient reçus,
- un dispositif de contrôle, qui est conçu pour contrôler si l'appareil (106) abonné de radiotéléphonie mobile peut avoir accès à la cellule (114 à 125) de radiotéléphonie mobile avant que d'autres blocs (605) d'informations de la multiplicité de blocs (605) d'informations soit reçus.
